# EUROPEAN PATENT APPLICATION

(11) **EP 0 543 791 A1**
(43) Date of publication of application: **26.05.1993**
(21) Application number: 92850274.9
(22) Date of filing: 18.11.1992
(51) Int. Cl.: B66F 9/075, B60N 2/38

(54) **A lifting vehicle for stacking loads**

(30) Priority: 18.11.1991 SE 9103391
(71) Applicant: BT Industries Aktiebolag, S-59581 Mjölby (SE)
(72) Inventor: Holmberg, Gert, S-591 45 Motala (SE)
(74) Representative: Berglund, Erik Wilhelm

(57) **Abstract**

A high-lift materials handling vehicle of the kind which comprises a wheel-mounted chassis (11), a chassis-mounted lifting mast (12), a chassis-mounted driving seat assembly (17) which is positioned transversely to the direction in which the vehicle is driven and which includes a seat (20) and a backrest (21). A load handling carrier (15) is movable along the lifting mast and can be manoeuvered from the driving seat assembly (17) for loading and offloading purposes. The vehicle further includes means for adjusting the position of the backrest (21) of the seat assembly (17) between different positions relative to the vehicle chassis (11), between a normal vehicle driving position and a rearwardly tilted position for handling loads at high heights. The backrest adjusting means will preferably include means which cause the seat (20) of the seat assembly (17) to ove horizontally as the backrest (21) is tilted.

## Description

The present invention relates to a lifting vehicle for stacking high loads of the kind which comprises a wheeled chassis, a chassis mounted lifting mast, a chassis mounted driving seat assembly which is positioned transversely to the direction in which the vehicle is driven and which includes a seat and a backrest, and a load carrier for stacking loads, said carrier being movable along the lifting mast and capable of being manoeuvered from the driving seat for loading and offloading purposes.

One type of lifting vehicle of the aforedefined kind is often referred to as a sliding frame truck, which is used for handling pallet-carried goods in storage locations. The goods are normally stacked on pallets and when the goods are to be shifted, the forks of the truck are brought into alignment with the pallet directly from the driving seat, by driving the truck to a correct position at right angles to the goods in question and by raising or lowering the forks into the correct position for lifting/lowering the goods. Such trucks work at high lifting heights, often heights of up to 10-12 m, which requires a high degree of accuracy on the part of the truck driver. The driver's work is also made more difficult by the fact that a greater part of his forward vision is obstructed by the truck frame or by the mast, which must be heavily dimensioned because of the high lifting heights involved. Furthermore, such storage locations are poorly illuminated, in order to cut down on costs. Although this poor lighting can be compensated for by fitting headlamps to the fork assembly, there are many instances when headlamps are not provided, despite. the poor visibility. Another problem associated with positioning of the fork assembly is that the driving seat is oriented at right angles to the longitudinal axis of the truck and therewith also at right angles to the long axis of the forks. Consequently, in order to be able to keep the goods, or load, in sight, it is necessary for the driver to twist his head through almost 90° and to lean backwards at the same time. This combined movement is unfavourable from an ergonomic aspect and is liable to result in strain injury to the driver.

Attempts have been made to solve these problems with the aid of different technical auxiliaries. For instance, one or more TV-cameras can be used to record the position of the forks continuously and the positions of the forks monitored on a monitor installed in the driving cabin. However, this arrangement has not functioned satisfactorily hitherto, due, among other things, to poor lighting and because the driver still needs to rely on his own visual control.

Accordingly, one object of the present invention is to provide a lifting vehicle of the kind defined in the introduction with which problems associated with uncomfortable inclination of the driver's head and poor vision are avoided to a significant extent. Further objects of the invention and advantages afforded thereby will be apparent from the following description. These objects and advantages are realized by a lifting vehicle having the characteristic features set forth in the following claims.

In the case of known vehicles of this kind, the backrest of the driving seat assembly is normally fixed rigidly to main seat structure. Accordingly, the invention is based on the realization that considerable improvement. would be obtained if the backrest were to be mounted in a manner which would allow it to be tilted backwards.

For instance, if the backrest could be tilted backwards when handling goods at high heights, the driver would need to twist his/her head in only one direction, i.e. sideways, in order to keep his/her eyes on the fork assembly. The extent to which the head needs to be twisted would also be greatly reduced. More specifically, the invention relates a lifting vehicle of the aforesaid kind which is provided with backrest adjusting device by means of which the backrest can be inclined in different positions in relation to the vehicle chassis, i.e. between a normal vehicle driving position and a rearwardly inclined position for facilitating handling of goods at high heights. The backrest adjusting device is preferably constructed to move the driving seat forward as the backrest is tilted back. This can be accomplished with the aid of a backrest holding device which enables the backrest to pivot and which restrains the backrest while the seat is moved horizontally forwards. The construction may be very simple, such as to enable it to be fitted also to existing vehicles.

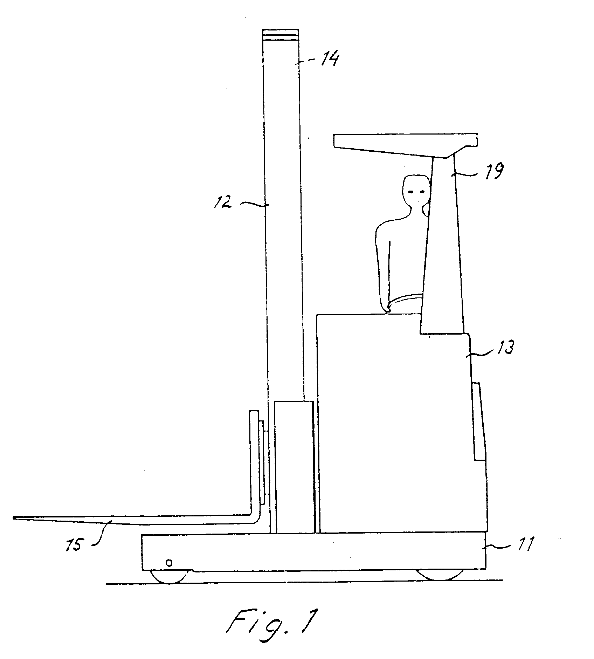

The invention will now be described with reference to the accompanying drawings, in which
Figure 1 is a side view of a truck constructed in accordance with the present invention;
Figure 2 is a rear view of the truck, showing the driving seat in its normal driving position;
Figure 3 is a detailed view, showing the driving seat in its normal upraised position; and
Figure 4 is a view similar to Figure 3, but shows the driving seat in its maximum rearwardly inclined position.

The illustrated vehicle is an industrial fork-lift truck, and more specifically a sliding frame truck of the kind mentioned in the introductory part of this specification, The truck includes conventionally a wheel-carried chassis 11, a chassis-mounted lifting mast 12 and a driving place 13 which extends transversely to the longitudinal axis of the vehicle. The lifting mast 12, or frame, is normally comprised of two or more telescopically mounted sections 14 and a load carrier 15 in the form of a lifting fork, which can be moved along the full length of the lifting mast. The lifting fork 15 extends in the direction of the vehicle long axis and is intended to carry palleted loads 16.

The driving place 13 of the illustrated embodiment includes a cabin-like construction which accommodates a driving seat assembly 17, a steering wheel 18 and other steering controls for manoeuvering the truck, and a driver protection frame structure 19. The driver is placed so as to be seated at right angles to the longitudinal axis of the truck and to the direction in which the truck is driven, and therewith also to the forward direction of the load carrying fork 15. The driving seat assembly 17 comprises a seat 20 and a backrest 21. Unlike the seat and backrest of known trucks of this kind, the seat and backrest of the inventive driving seat arrangement are not immovably mounted on the vehicle, but are able to move in relation to the vehicle and also in relation to one another. The seat 20 is carried by two or more seat support devices 22, each of which includes a shaft 23 which is fixedly mounted on the seat chassis, and a slot 24 provided on the seat. The slot 24 is preferably oval and is provided in a vertical support plate fitted beneath the seat. The slot will thus have a definite length, so as to provide two defined stop limits. The seat chassis 25 is normally part of the actual vehicle construction, for instance the upper part of the vehicle battery housing. The backrest 21 is connected to the seat 20 by means of a hinge 27 which hingedly connects the bottom edge 32 of the backrest with the rear edge 33 of the seat. The hinge includes a pivot pin 27 which forms the backrest tilting axle. In addition to being connected to the tilting axle 27, the seat backrest is also connected to a holding device 28 which permits the backrest to pivot and which may have the same form as the seat support means 22. Thus, in the illustrated case, the backrest holding device 28 comprises a journal pin 29 which is attached to some appropriate part of the truck, e.g. to the protective frame 19, and an elongated slot 30 which is provided on the backrest and which coacts with the journal pin 29. Similar to the slot 24, the slot 30 may also have an oval shape and be included in a vertical support plate 31 fitted behind the backrest 21.

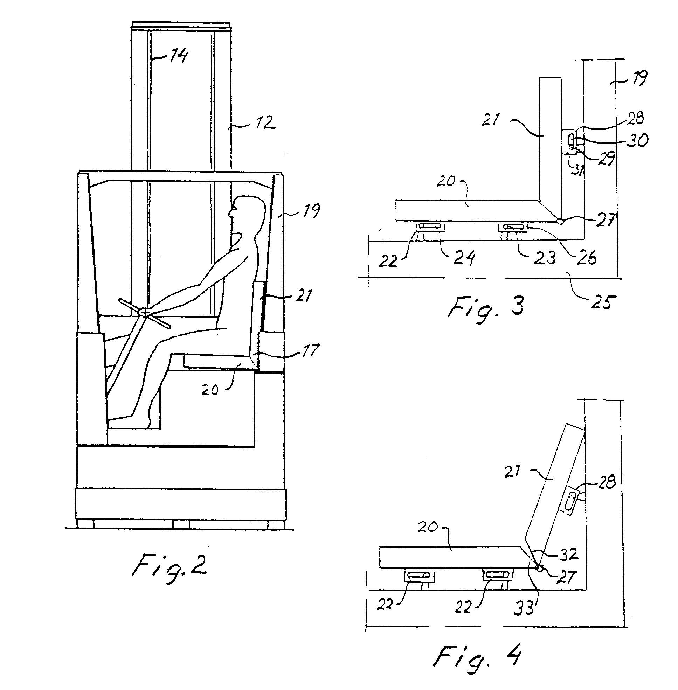

As will be seen from Figure 4, the seat support means 22 allows the seat 20 to be moved backwards and forwards through a distance corresponding to the length of the slot 24. The journal pin 29 and therewith the backrest tilting axle 27 will also be moved in accompaniment with movement of the seat 20. Since the tilting axle 27 forming part of the holding device 28 is fixedly mounted to the truck, the seat backrest will swing about the journal pin 29, and therewith also about the tilting axle 27, as the seat moves forwards. The characteristics of this movement can be controlled, by adjusting the distance between the journal pin 29 and the tilting axle 27, so as to achieve a suitable balance between forward movement of the seat 20 and rearward tilting of the backrest 21. It is important that the driver is able to reach the control pedals with his feet when the backrest is tilted backwards, and hence the forward movement of the seat 20 as the backrest 21 is tilted. Because the seat 20 moves only horizontally, the positions of the pedals can, in the main, be left unchanged. This horizontal movement of the seat 20, and therewith tilting of the backrest 21, can be achieved with the aid of some suitable means (not shown) and in the simplest case can be achieved entirely manually, optionally assisted by a spring, a lever or some other setting device. Alternatively, the seat adjusting means may have a more complicated nature and include a motor driven seat adjusting device which can operate automatically to increase the tilting angle of the backrest gradually in relation to the height to which the carrier 15 is raised. However, the present invention is best suited to simpler mechanical solutions which can be steered and controlled directly by the driver, thereby keeping costs at a lower level than otherwise and eliminating or reducing the difficult working problems encountered in this technical field.

## Claims

**1.** A high-lift materials handling vehicle of the kind which comprises a wheel-mounted chassis (11), a chassis-mounted lifting mast (12), a chassis-mounted driving seat assembly (17) which is positioned transversely to the direction in which the vehicle is driven and which includes a seat (20) and a backrest (21), and a load handling carrier (15), said carrier being movable along the lifting mast and capable of being manoeuvered from the driving seat for loading and offloading purposes, **characterized in that** the vehicle further includes means for adjusting the position of the backrest (21) of the seat assembly to different positions of inclination relative to the vehicle chassis, between a normal vehicle driving position and a rearwardly tilted position for handling loads at high heights.

**2.** A vehicle according to Claim 1, **characterized in that** the backrest adjusting means is intended to tilt the backrest about a tilting axle (27) which is generally parallel with the longitudinal axis of the vehicle.

**3.** A vehicle according to Claim 1 or Claim 2, **characterized in that** the backrest adjusting means is intended to move the seat (20) forwards as the backrest (21) is tilted rearwards.

**4.** A vehicle according to Claim 3, characterized in that the backrest adjusting means includes a manually operated or motor driven setting device which functions to move the seat forwards as the backrest is tilted backwards.

**5.** A vehicle according to any one of Claims 2-4, **characterized in that** the tilting axle (27) is mounted on the bottom part of the backrest and to the rearward edge (33) of the seat (20).

**6.** A vehicle according to any one of Claims 2-5, **characterized in that** the backrest (21) and the seat (20) are mutually connected by means of a hinge (27) which forms a tilting axle and which is located at the rear edge of the seat (20) and the bottom edge of the backrest (21); and in that the backrest is attached to a holding device (28) which is stationary in relation to the seat (20) and which allows the backrest to pivot; and in that the holding device (28) is spaced vertically from the hinge means (27) so that as the seat (20) moves forwards the backrest will.be held by the holding device while pivoting in said device and tilting around the tilting axle of said hinge means.

**7.** A vehicle according to Claim 6, **characterized in that** the seat (20) is supported by at least one supporting device (22) which will only allow the seat (20) to move horizontally.

**8.** A vehicle according to Claim 7, **characterized in that** the seat supporting device (22) includes a slot (24) provided on the seat and a journal pin (23) or some like device which is attached to the chassis (25) and which is intended to move in the slot (24) between two end positions defined thereby.

**9** A vehicle according to any one of Claims 6-8, **characterized in that** the backrest holding device (28) includes a slot (30) provided on the backrest of the seat assembly and a journal pin (29) which is stationary in relation to the backrest and which is to move in the slot (30) between two end positions defined thereby.

**10.** A vehicle according to any one of the preceding Claims, **characterized in that** the vehicle further includes control means for automatically adjusting the tilt of the backrest (13) in relation to the height to which the carrier (15) is raised.
